# EUROPEAN PATENT APPLICATION

(11) **EP 2 596 908 A1**
(43) Date of publication of application: **29.05.2013**
(21) Application number: 11190825.7
(22) Date of filing: 25.11.2011
(51) Int. Cl.: B24B 23/03, B24B 41/00, B24B 41/04, B25F 5/00, B23Q 11/00, F16F 15/36

(54) **Machine tool for machining surfaces provided with a dynamic balancing system**

(71) Applicant: Valentini, Guido, 20122 Milano (IT)
(72) Inventor: Valentini, Guido, 20122 Milano (IT)
(74) Representative: Dreiss

(57) **Abstract**

The invention refers to a machine tool (100; 101; 102; 103; 104; 105; 106; 107) comprising
- a motor with a motor shaft (2) adapted for performing a rotational movement around an axis (3) of rotation,
- a working element (4) adapted for performing an orbital or rotating orbital or random orbital movement,
- means for transforming the rotational movement of the shaft (2) into the orbital or rotating orbital or random orbital movement of the working element (4),
- the transformation means comprising an excentric attachment (8) and a counter weight (9), wherein the attachment (8) and the counter weight (9) are connected torque proof to the shaft (2). In order to efficiently reduce vibrations of the tool (100; 101; 102; 103; 104; 105; 106; 107) it is suggested that the excentric attachment (8) and/or the counter weight (9) is provided with at least one circular groove (6) extending around the axis (3), wherein a plurality of masses (5), preferably each of spherical form, is disposed in the groove (6) such that they are movable along the groove's (6) circumferential extension.

## Description

The present invention refers to a machine tool performing a rotary orbital, a random orbital or an orbital movement and provided with a balancing system, in order to minimize vibrations of the tool while functioning. In particular the invention refers to a machine tool comprising
- a motor with a motor shaft adapted for performing a rotational movement around an axis of rotation,
- a working element adapted for performing an orbital or rotating orbital or random orbital movement,
- means for transforming the rotational movement of the motor shaft into the orbital or rotating orbital or random orbital movement of the working element, and
- the transformation means comprising an excentric attachment and a counter weight, wherein the attachment and the counter weight are connected torque proof to the shaft.

Reference is made to an apparatus particularly for a machine tool which, for example but not limited to, is a rotary orbital polisher or an orbital or rotary orbital sander in which the working element, consisting of a pad capable of receiving an abrasive or polishing element and/or an accessory, is excentrically mounted in respect to the axis of rotation of the engine shaft. Rotation of the engine shaft results in an orbital or rotary orbital movement of the working element, for example but not limited to, by means of a excentric attachment, excentrically guiding a pin connected to the working element. Depending on how the working element is guided in the machine tool it performs an orbital or a rotary orbital or a random orbital movement. An orbital movement means that the working element moves two-dimensionally in its plane of extension, i.e. forward and backward a as well as to both sides. A rotary orbital movement means that the working element, additionally to the orbital movement, could perform, following its own free will or due to a mechanical guiding or driving mechanism, a rotational movement, which may be desired for some tools.

According to the known art, in order to create a rotary orbital or orbital machine tool balanced, which accordingly has a minimized level of vibration, the dimensioning of an excentric attachment and of a counterweight is provided acting to counter-balance the rotary orbital masses based on the weight, the speed of rotation and the orbitting of the same.

In reality there is a disadvantage that the dimensioning of the excentric attachment and the counterweight must provide for a variation of the weight of the rotary orbital masses due to the use of different abrasive papers applicable and/or of various accessories such as, for example, an interface or buffer for polishing.

A machine tool that leaves the factory with a given level of vibration (in m/sec²) for a specific weight and geometry of its components, may suffer as a result of the use of inappropriate accessories, a worsening of the balance caused by the differences in weight and geometry of the abrasive elements and/or the accessories theirselves.

In addition to the amount of variables described above, also a change of the characteristics of the pad or accessories applied due to wear after repeated sessions of work can create vibrations that have a negative impact on the user of the machine tool.

In the known art there are vibration dampers for motor shafts. These solutions have a rather sophisticated design, inadequate for solutions for hand held machine tools.

In view of the prior art in which the excentric attachment and the counterweight are designed for a given weight in a given position, the object of the present invention is to propose a rotary orbital, random orbital or orbital machine tool equipped with a balancing system comprising a counterweight allowing a minimization of the vibarations.

In accordance with the present invention this object is achieved by a machine tool according to the preamble of claim 1, wherein the excentric attachment and/or the counterweight is provided with at least one circular groove extending around the axis of rotation, wherein a plurality of masses is disposed in the groove such that they are movable along the groove's circumferential extension. This is referred to hereinafter as "dynamic balancing system".

Preferably, the at least one circular groove extends around the axis of rotation equally spaced to the axis. The masses are free to move preferably due to the centrifugal forces effective on the masses during functioning of the machine tool. Preferably, the masses are of spherical form.

In contrast to the prior art balance system comprising the counterweight rotating with the motor shaft, the dynamic balancing system comprising the plurality of masses freely movable along the circular groove can dynamically compensate vibrations caused, for example, by a varying weight of the orbital or rotating orbital masses, a varying speed of movement of the working element, different appliances attached to the working element (new or used appliances or appliances from different manufacturers) or play within the bearings. The dynamic balancing system is characterized in that it comprises means for dampening the vibrations, comprising a plurality of masses incorporated in at least one circular groove containing a viscous material in which the masses themselves are immersed and free to orient themselves with the effect of centrifugal force when the shaft rotates around its longitudinal axis.

Said groove, provided in the excentric attachment and/or the counterweight is excentric in respect to the pin guided in the exxentric attachment and transforming the shaft's rotational movement into the orbital or rotary orbital or random orbital movement of the working element.

When using the tool the spherical masses tend to automatically assume the positions most adapted to dampen the vibration level, so they form a dynamic balancing system which can be provided alternatively or additionally to the existing counterweight.

It is noted that, contrary to the balance exclusively obtained with fixed compensation weights, the dynamic balancing system compensates for dynamic changes in weight, speed and/or geometry of the tool or of the orbitally or rotating orbitally or random orbitally moving parts of the tool, respectively, which may vary during the normal use of the tool.

These and other features and advantages of the present invention will be made more obvious by the following detailed description of examples of its practical implementation described without limitation in the attached drawings, wherein:
- Figure 1: shows a view in vertical section of a first embodiment of a machine tool according to the invention;
- Figure 2: shows a view in vertical section of a second embodiment of a machine tool according to the invention;
- Figure 3: shows a view in vertical section of a third embodiment of a machine tool according to the invention;
- Figure 4: shows a view in vertical section of a fourth embodiment of a machine tool according to the invention;
- Figure 5: shows a view in vertical section of a fifth embodiment of a machine tool according to the invention;
- Figure 6: shows a view in vertical section of a sixth embodiment of a machine tool according to the invention;
- Figure 7: shows a view in vertical section of a seventh embodiment of a machine tool according to the invention;
- Figure 8: shows a view in vertical section of an eighth embodiment of a machine tool according to the invention.
- Figure 9: shows a partial view in perspective of the dynamic balancing system of the machine tool according to the fifth embodiment;
- Figure 10: shows an enlarged view in plan from below of an interface pad for attachment; and
- Figure 11: shows a front enlarged view of the interface of figure 10.

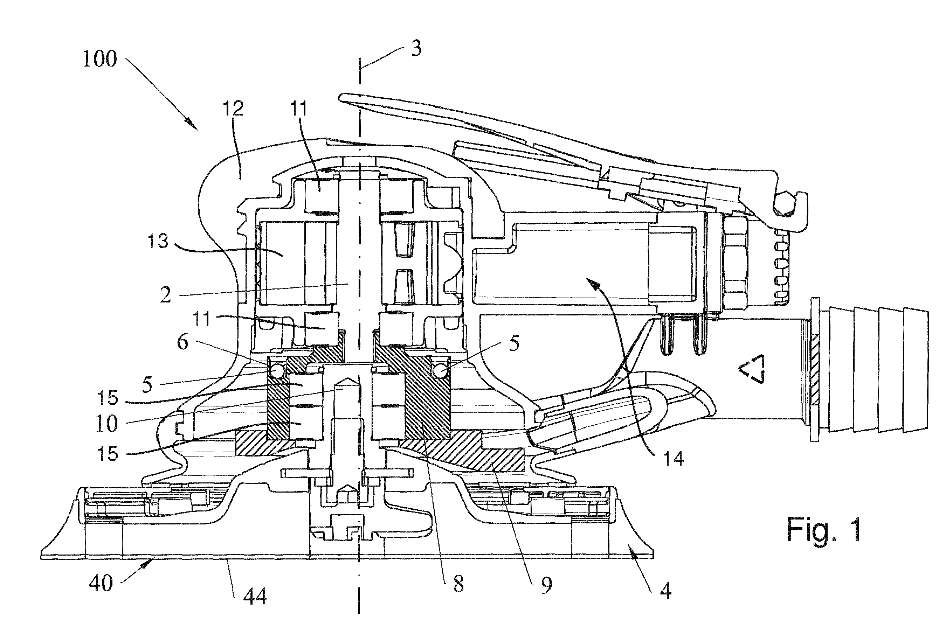

With reference to the attached figures, and in particular to figure 1, a machine tool 100 is disclosed including a shaft 2 rotating around an axis of rotation 3, working element 4, for example a support plate or pad 4, is mounted excentrically to the axis 3 and is brought into an orbital or rotating orbital movement by a guiding pin 10 excentrically connected to the axis 3 and rotating around axis 3. With other words, the working element 4 performs an orbital or rotating orbital or random orbital movement around rotating axis 3.

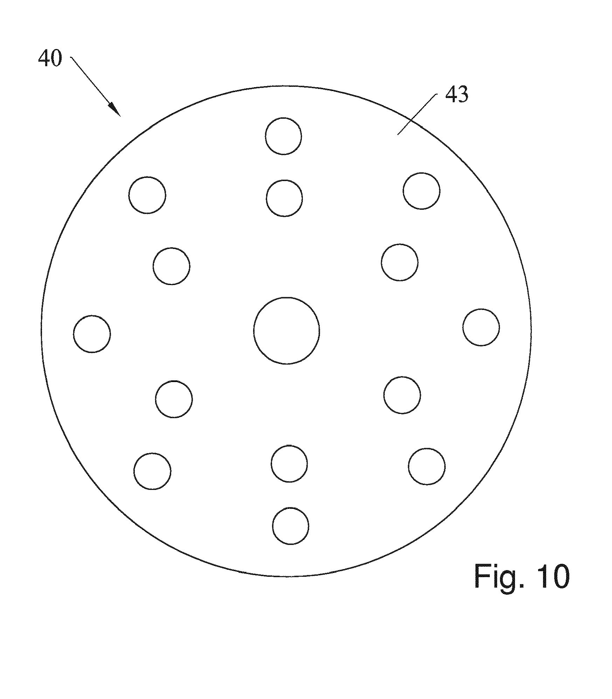

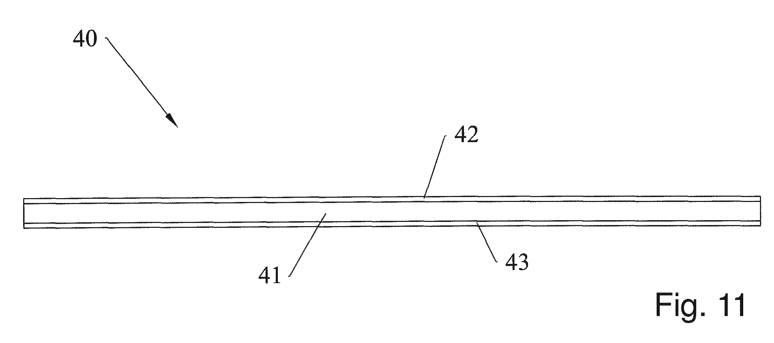

At the lower side of pad 4 (figure 1) it is possible to releasably attach several types of abrasive elements which are consumed when used and/or accessories. For example, an accessory may be an attachment interface 40 (figure 11) consisting of a thick polyurethane layer 41 placed between a top layer 42 of plush and a lower layer 43 of Velcro fasteners (figures 10-11). The top layer 42 of plush serves for attaching the interface 40 to pad 4, and the Velcro fasteners serve for removably attaching the abrasive or polishing element 44 for consumption to the interface 40.

Further, the tool 100 comprises ball bearings 11 for rotably supporting the motor shaft 2 in respect to a housing 12 of the tool 100. Rotor blades 13 extend radially from the shaft 2 and are actuated by compressed air enterring the tool 100 through an air intake duct 14. Hence, the tool shown in figure 1 is a pneumatically driven hand-held power tool 100, in particular a rotary orbital sander. Of course, the tool according to the present invention may be any other kind of tool, too, for example an electrically driven tool or a stationary (not hand-held) tool. The invention has its advantages with all kinds of tools whose working element 4 performs an orbital or rotating orbital movement during operation of the tool.

The guiding pin 10 is disposed excentrically in respect to the rotating axis 3 of the shaft 2. With other words, the longitudinal axis of the guiding pin 10 is spaced apart from and essentially parallel to the rotating axis 3. The guiding pin 10 is rotably supported in respect to an excentric attachment element 8 by means of further ball bearings 15. A rotation of the shaft 2 results in an orbital movement of the guiding pin 10, which urges the working element 4 to move rotating orbitally.

Thanks to the dynamic balancing system, the tool 100 is able to maintain a minimum level of vibration, even if the tool 100 is used with abrasive media of different weights and/or with or without accessories.

The machine 100 is provided with a dynamic balancing system for damping vibrations, the dynamic balancing system comprising at least a plurality of masses 5 of preferably spherical form, housed in at least one circular groove 6 present on the excentric attachment 8 and/or a counterweight 9 connected to and rotating together with the motor shaft 2.

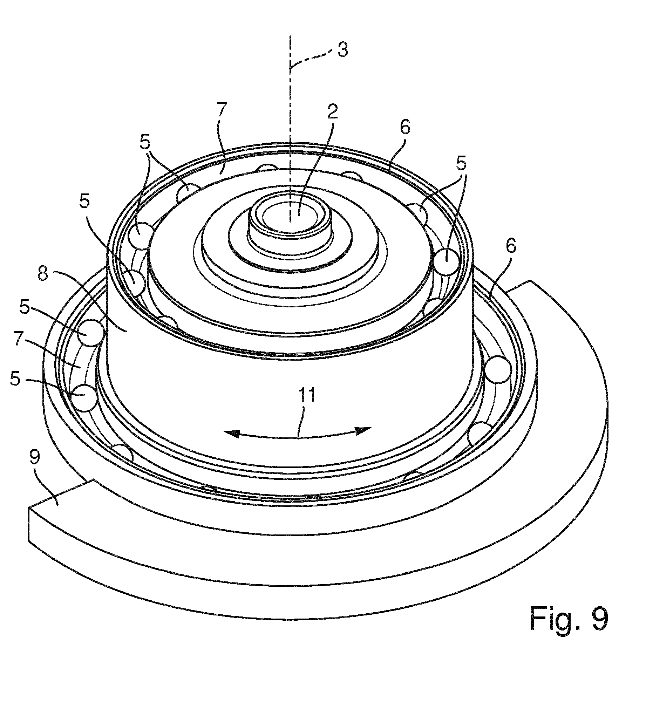

Such a groove 6 is carved out excentrically in respect to the guided pin 10 and such that the masses 5 are free to move along the circumferential extension 11 (see figure 9) of said circular groove 6. The circular groove 6 contains a viscous material 7, in which the spheres 5 are immersed, such as oil 7 for bearings. The spheres 5 are completely drowned in the oil 7. The groove 6 has side walls to restrict a movement of the spheres 5 in radial directions in respect to the rotational axis 3. The groove 6 has a bottom surface and a cover surface (not shown in figure 9) in order to restrict a movement of the spheres 5 in axial directions in respect to the rotational axis 3. Hence, the spherical masses 5 can freely move essentially only along the circumferential extension 11 of the groove 6. At least one of the groove's 6 bottom and cover sufaces is preferably detachable from the excentric attachment 8 and/or the counterweight 9, in order to allow easy insertion of the spheres 5 into the groove 6 during mounting of the tool 100, 101, 102, 103, 104, 105, 106, 107.

In a first embodiment of the invention of the machine tool 100 illustrated in figure 1, the plurality of masses 5 is placed in the groove 6 carved out on the upper face of the excentric attachment 8.

Motor shaft 2, the excentric attachment 8 and the counterweight 9 rotate about axis 3 and are attached to each other torque proof. Alternatively, they can be made of a single part. The guided pin 10, the pad 4, the interface 40 and the abrasive material 44 make an orbital movement provoked by the rotatinal movement of the shaft 2.

The groove 6 is a technical solution that can be made during manufacturing of the excentric attachment 8 or the counterweight 9 in which the groove 6 can be embodied. This makes the manufacturing and assembly of the machine tool including the dynamic balancing system very efficient.

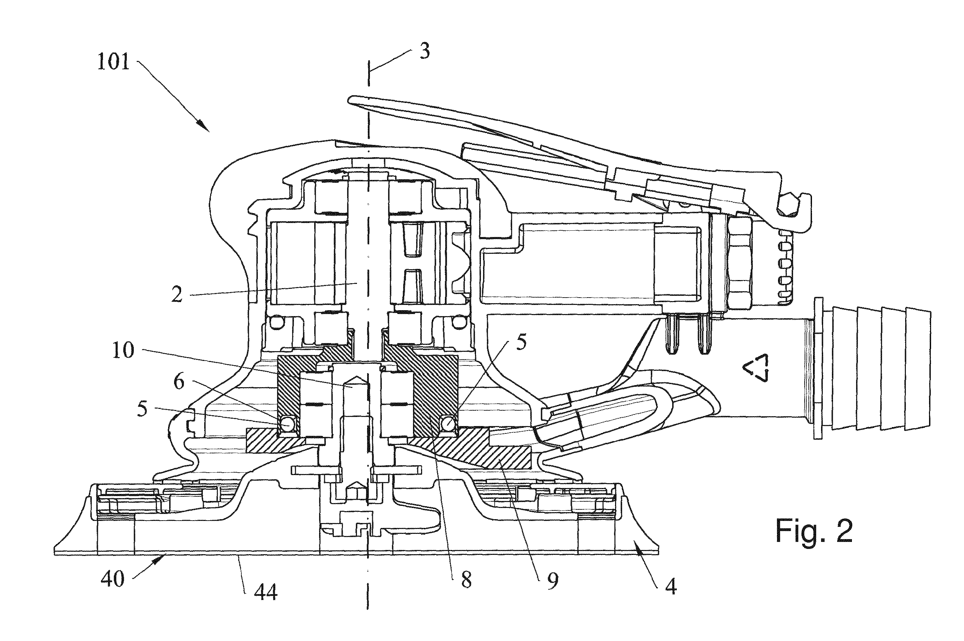

In a second embodiment of the invention of the machine 101 illustrated in figure 2, a plurality of spheres 5 is housed on the lower face of the excentric attachment 8.

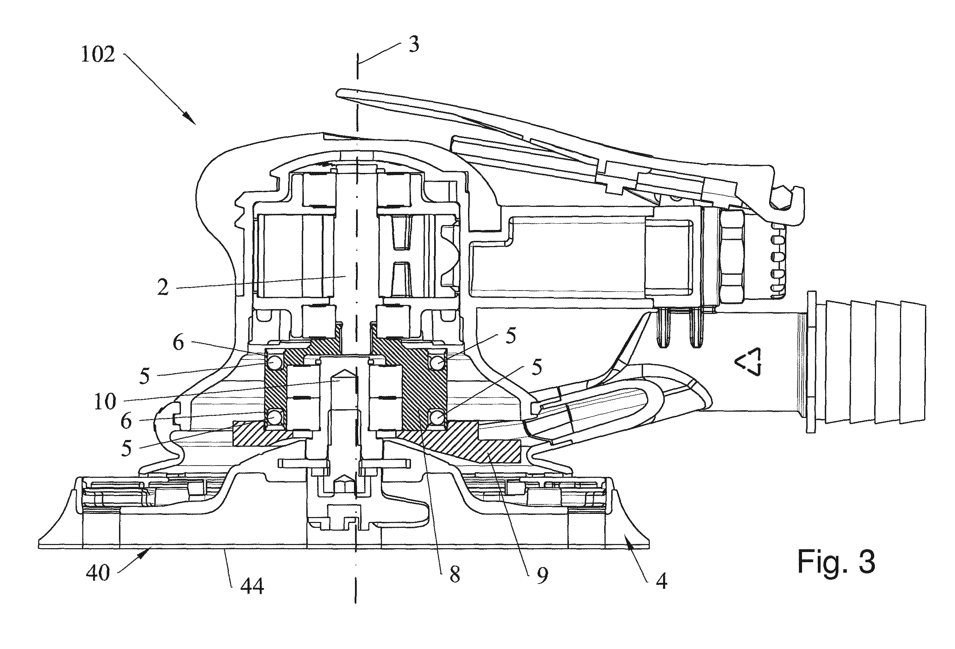

In a third embodiment of the machine tool 102 shown in figure 3 a plurality of spheres 5 is housed on the upper face as well as on the lower face of the excentric attachment 8 following a combination of the first and the second embodiment.

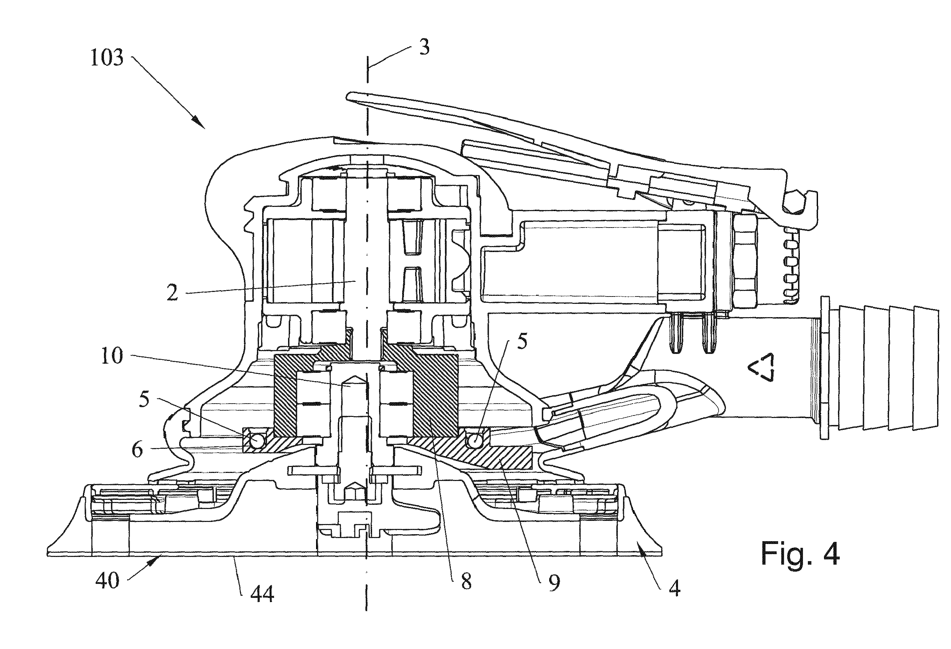

In a fourth embodiment of the machine tool 103 shown in figure 4, the plurality of spheres 5 is placed on the counterweight 9.

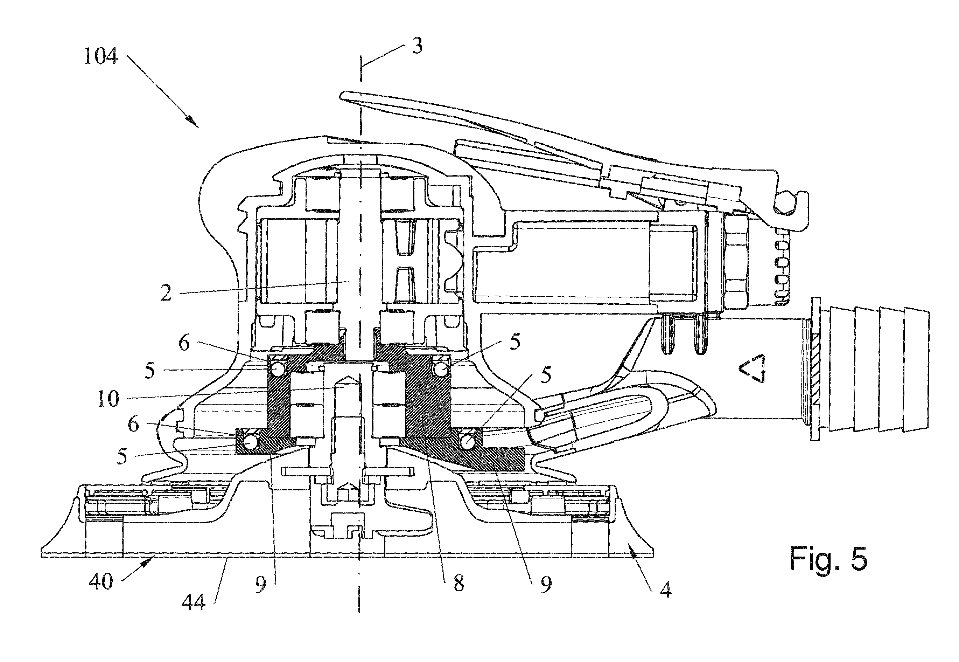

In a fifth embodiment of the machine tool 104 illustrated in figure 5, the plurality of spheres 5 is housed on the upper face of the excentric attachment 8 as well as on the counterweight 9 following a combination of the first and the fourth embodiment.

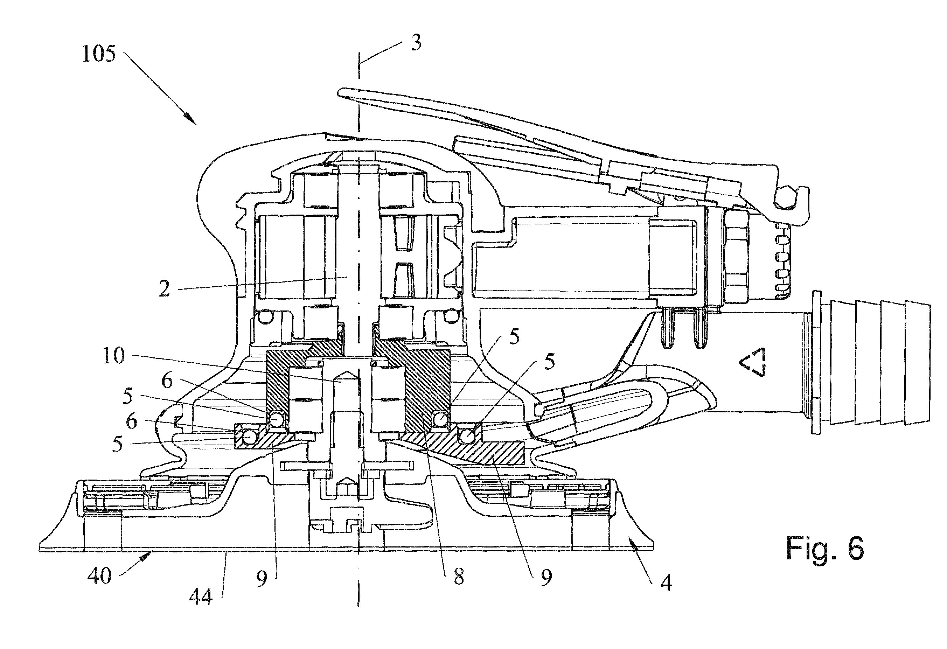

In a sixth embodiment of the machine tool 105 shown in figure 6, a plurality of spheres 5 is housed on the lower face of the excentric attachment 8 as well as on the counterweight 9 according to a combination of the second and the fourth embodiments.

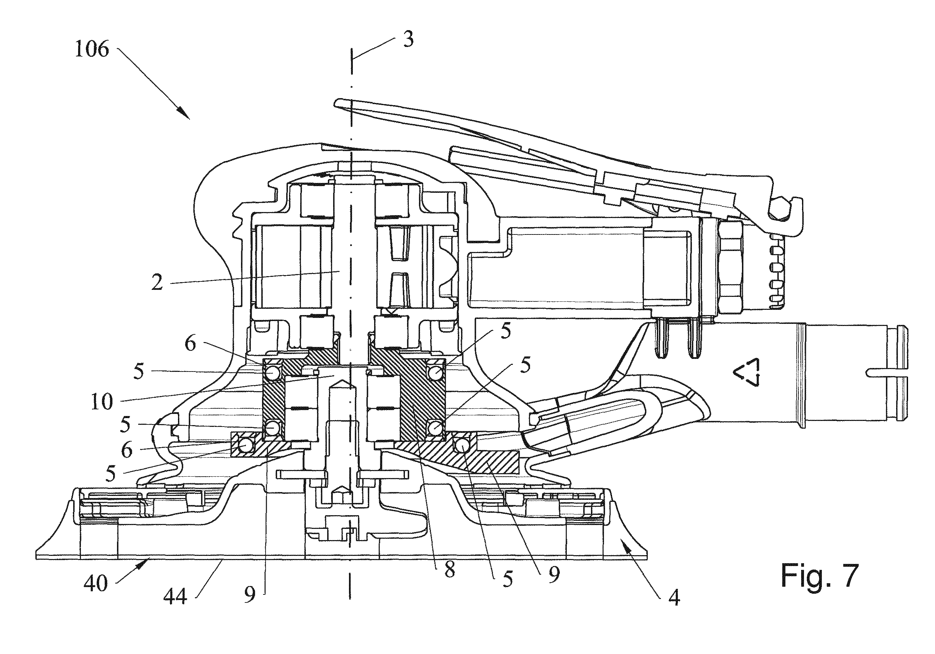

In a seventh embodiment of the machine tool 106 illustrated in figure 7, a plurality of spheres 5 is housed on the upper face and on the lower face of the excentric attachment 8 as well as on the counterweight 9, according to a combination of the first, second and fourth embodiment.

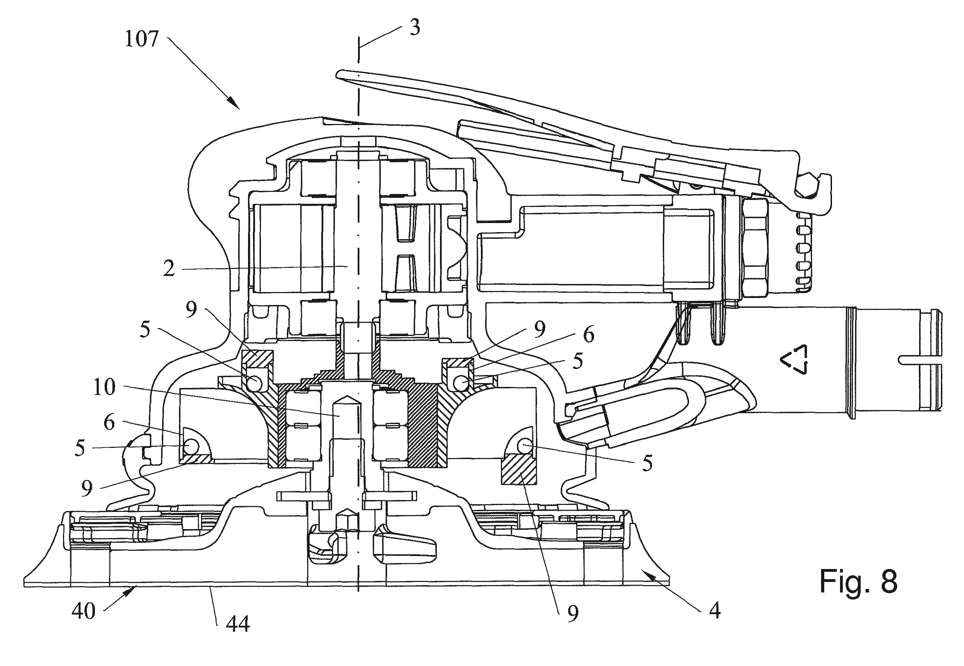

Also, in an eighth embodiment of the machine tool 107, a counterweight 9 is provided having a different form in respect to the previous versions, shown in figure 8, it is possible to accommodate a plurality of masses 5 in the groove 6 carved out on top as well as in the groove 6 carved out at the bottom in respect to the counterweight 9 itself.

The operation of the dynamic balancing system for the damping of vibrations during operation of the tool is as follows.

Each balancing mass 5 drowned in oil 7 is free to move within a groove 6, excentrically carved out in respect to the guided pin 10 and bound to the rotation movement of the motor shaft 2.

As a result of the centrifugal force, the free masses 5 of the dynamic balancing system will tend to arrange themselves near the direction of a vector resulting from the centrifugal acceleration acting on the centre of mass of the assembly of the entire unbalanced mass - balancing system comprising all the free masses 5.

A variation of the unbalanced masses 5 will result in and correspond to a variation of the position of the centre of mass of the assembly of the entire unbalanced mass - balancing system. This will involve a change of the direction of the vector resulting from the centrifugal acceleration of this assembly.

Following this change, the dynamic balancing system will automatically reposition the free masses 5 in the new direction of the centrifugal acceleration vector compensating for the variation of the entire unbalanced mass thereby reducing the level of vibration of the tool.

Consequently, if an abrasive or polishing element and/or an accessory of weight or geometry different from those normally associated with the tool is used, the entire unbalanced mass will vary and the dynamic balancing system will automatically compensate these differences. Advantageously the machine tool will therefore be more flexible and adapted to different conditions of use. A particular advantage of the present invention is the fact that a hand-held machine tool equipped with the dynamic balancing system can be used by a user for a much longer time according to EN ISO 5349. This is because the vibrations created by the tool while functioning due to the tool's unbalanced masses and affecting the user are significantly reduced by the present invention. This applies even under varying conditions of use, that is even after a long period of use and even with varying unbalanced masses.

## Claims

1. Machine tool (100; 101; 102; 103; 104; 105; 106; 107) comprising
- a motor with a motor shaft (2) adapted for performing a rotational movement around an axis (3) of rotation,
- a working element (4) adapted for performing an orbital or rotating orbital or random orbital movement,
- means for transforming the rotational movement of the shaft (2) into the orbital or rotating orbital or random orbital movement of the working element (4),
- the transformation means comprising an excentric attachment (8) and a counter weight (9), wherein the attachment (8) and the counter weight (9) are connected torque proof to the shaft (2),
**characterized in that**
the excentric attachment (8) and/or the counter weight (9) is provided with at least one circular groove (6) extending around the axis (3), wherein a plurality of masses (5) is disposed in the groove (6) such that they are movable along the groove's (6) in circumferential extension (11).

2. Machine tool (100; 101; 102; 103; 104; 105; 106; 107) according to claim 1, wherein the at least one circular groove (6) extends around the axis (3) of rotation equally spaced to the axis (3).

3. Machine tool (100; 101; 102; 103; 104; 105; 106; 107) according to claim 1 or 2, wherein the masses (5) are a solid substance.

4. Machine tool (100; 101; 102; 103; 104; 105; 106; 107) according to one of the preceding claims, wherein the masses (5) are of spherical form.

5. Machine tool (100; 101; 102; 103; 104; 105; 106; 107) according to one of the preceding claims, wherein the groove (6) is partially filled with a fluid or a viscous material (7).

6. Machine tool (100; 101; 102; 103; 104; 105; 106; 107) according to claim 5, wherein the fluid or viscous material (7) is oil.

7. Machine tool (100; 101; 102; 103; 104; 105; 106; 107) according to one of the preceding claims, wherein the motor is an electric or a pneumatic motor.

8. Machine tool (100; 101; 102; 103; 104; 105; 106; 107) according to one of the preceding claims, wherein the machine tool (100; 101; 102; 103; 104; 105; 106; 107)is a hand-held tool.

9. Machine tool (100; 101; 102; 103; 104; 105; 106; 107) according to one of the preceding claims, wherein the machine tool (100; 101; 102; 103; 104; 105; 106; 107) is a sander, in particular an orbital, a random orbital or a rotary orbital sander, or a polisher, in particular a rotary orbital polisher.
